# EUROPÄISCHE PATENTANMELDUNG

(11) **EP 4 796 617 A1**
(43) Veröffentlichungstag der Anmeldung: **26.08.2026**
(21) Anmeldenummer: 26160153.8
(22) Anmeldetag: 23.02.2026
(51) Int. Cl.: C10J 3/48, C01B 3/34, C10J 3/00, C10J 3/80, C10J 3/86

(54) **VERFAHREN ZUR GEWINNUNG EINES SYNTHESEGASES AUS ABFALLPRODUKTEN ÜBER EINE VERGASUNGSREAKTION IN VERBINDUNG MIT EINER REFORMIERUNGSREAKTION UNTER RÜCKFÜHRUNG THERMISCHER ENERGIE**

(30) Priorität: 25.02.2025 DE 102025107088
(71) Anmelder: Cyclize GmbH, 70771 Leinfelden-Echterdingen (DE)
(72) Erfinder: Renninger, Stephan, 70199 Stuttgart (DE)
(74) Vertreter: Molnia Ho PartG mbB

(57) **Zusammenfassung**

Die vorliegende Erfindung betrifft ein Verfahren und eine Vorrichtung zur Gewinnung eines Synthesegases aus mindestens einem Abfallprodukt über eine Vergasungsreaktion in Verbindung mit einer Reformierungsreaktion unter einer Rückführung thermischer Energie. Das Verfahren umfasst den Schritt S1 der Zuführung eines Aufgabematerials und eines ersten und/oder zweiten Oxidationsmittels in einen Vergasungsreaktor, wobei das Aufgabematerial insbesondere mindestens ein festförmiges, flüssiges und/oder gasförmiges Abfallprodukt umfasst. Zudem umfasst das Verfahren den Schritt S2 der Vergasung des Aufgabematerials in dem Vergasungsreaktor durch das erste und/oder zweite Oxidationsmittel unter Zuführung thermischer Energie in ein Kohlenwasserstoffgasgemisch und in mindestens ein Nebenprodukt, wobei das Nebenprodukt insbesondere Bodenasche und/oder Flugasche umfasst. Das Verfahren umfasst zudem den Schritt S3 des Zuführens des Kohlenwasserstoffgasgemisches aus dem Vergasungsreaktor in eine Reformer-Einheit und den Schritt S4 der Aufbereitung des Kohlenwasserstoffgasgemisches in der Reformer-Einheit in ein rohes Synthesegas unter Zugabe des ersten und/oder zweiten Oxidationsmittels und wobei zumindest ein Teil einer in Schritt S4 abgegebenen thermischen Energie in den Vergasungsreaktor rückgeführt wird um zumindest einen Teil der in S2 zugeführten thermischen Energie bereitzustellen.

## Beschreibung

### Technisches Gebiet

Die vorliegende Erfindung betrifft ein Verfahren und eine Vorrichtung zur Gewinnung eines Synthesegases aus Abfallprodukten über eine Vergasungsreaktion in Verbindung mit einer Reformierungsreaktion unter Rückführung thermischer Energie.

### Stand der Technik

Die Gewinnung von Synthesegas auf fossiler Basis in großem Maßstab findet derzeit in energieintensiven Verfahren, wie etwa der Erdgasreformierung oder der Kohlevergasung, statt. Synthesegas ist hierbei als Gasgemisch aus Kohlenmonoxid (CO) und Wasserstoff (H2) definiert. Verschiedene neuartige Verfahren zur Herstellung von Synthesegas sind jedoch derzeitig noch mit Defiziten behaftet.

So wird bei der Biogasreformierung das Synthesegas dezentral erzeugt, was aufgrund kleinerer Anlagen, hohen Investitions- und Betriebskosten sowie logistischer Ineffizienzen zu hohen Kosten führt. Daraus resultieren deutlich höhere Preise für Synthesegas im Vergleich zu Erdgas.

Verfahren, bei welchen eine Elektrolyse, gepaart mit einer Wassergas-Shift-Reaktion oder einer Co-Elektrolyse verwendet werden, erfordern einen sehr hoher elektrischen Energieaufwand bei geringer Energieeffizienz, weshalb wiederum hohe Preise für das entstehende Synthesegas entstehen.

Thermisch betriebene Waste-to-Syngas-Verfahren nutzen die Oxidation und Verbrennung eines Teils des Abfallrohstoffs, um die notwendige Energie für die thermische Reformierung zu Synthesegas bereitzustellen. Daraus resultieren hohe Kohlenstoffdioxid-Emissionen durch den Prozess, welche auch in nachgeschalteten Verfahren nicht effizient genutzt werden können.

Bei den thermischen Verfahren zur Herstellung von Synthesegas aus einem Abfallstoff ist bekannt, dass kohlenstoffhaltige Abfallmaterialien unter Zugabe von Oxidationsmitteln wie Sauerstoff oder Wasserdampf in Synthesegas umgewandelt werden, wobei zunächst eine Vergasung stattfindet. Die bei der Vergasung entstehenden gasförmigen Fraktionen sind von unterschiedlicher Kettenlänge. Ein Teil davon wird kondensiert und zur Substitution von Rohöl vermarktet. Die gasförmigen Fraktionen können nach deren Vergasung zur Wärme- und Stromgewinnung verwendet werden. Bezüglich der Wirtschaftlichkeit in der industriellen Anwendung sind jedoch die Anforderungen an die einzelnen Fraktionen und die Zusammensetzung der eingesetzten Abfallprodukte sehr hoch, weshalb bisherige Anlagen zur Vergasung auf die Art, beziehungsweise auf verschiedene Reinheiten des Abfallproduktes spezialisiert und somit limitiert sind. Darüber hinaus können die bei der Vergasung anfallenden wertvollen Nebenprodukte, wie etwa verschiedene Aschearten, wie etwa Bodenasche, Flugasche oder Teichasche, nicht weiterverwendet werden. Außerdem ist eine mögliche schwankende Zuführung von Abfallprodukten nachteilig für einen sicheren und schonenden Betrieb des Vergasungsreaktors. Damit wird auch die Möglichkeit einer konstanten Bereitstellung eines Produktstroms an Kohlenwasserstoffgemisch erschwert.

Ferner sind Verfahren zur Veredelung von ungereinigten Rohgasen über eine Reformierung bekannt, die kohlenwasserstoffhaltige Gasgemische in ein von Schadstoffen gereinigtes und wasserstoffreicheres Synthesegas umwandeln, jedoch bleibt eine Wiederverwertung von bereits verwendeten Stoffen aus der Abfallwirtschaft aus. In bekannten Reformierungsverfahren werden Kohlenwasserstoffgemische wie etwa Erdgas, Leichtbenzin, Methanol oder auch Biomasse als Ausgangsstoffe mit einem Oxidationsmittel, beispielsweise Wasserdampf, unter Wärmeaufwand zu Synthesegas reformiert.

Insgesamt zeigen bekannte Verfahren einen hohen Energieeinsatz der gesamten Prozesskette vom Primärenergieträger zum finalen Produkt, wodurch eine mögliche Elektrifizierung unwirtschaftlich wäre. Dies lässt sich beispielsweise durch einen hohen Verlust von Abwärme, unverbrauchtem Einsatzstoff oder unverbrauchtem Oxidationsmittel begründen. Nicht elektrische Verfahren, die Abfall einsetzen, führen durch den Einsatz von Sauerstoff oder Luft als Oxidationsmittel zu einer Entstehung von Kohlenstoffdioxid und der sukzessiven Emission dieses Schadstoffes. Dies führt wiederum zur Verringerung der Synthesegasqualität.

### Darstellung der Erfindung

Ausgehend von dem bekannten Stand der Technik ist es eine Zielsetzung der vorliegenden Erfindung, ein verbessertes Verfahren zur Gewinnung eines Synthesegases aus Abfallprodukten über eine Vergasungsreaktion in Verbindung mit einer Reformierungsreaktion unter einer Rückführung thermischer Energie sowie eine entsprechende Vorrichtung bereitzustellen.

Dabei steht insbesondere der Aspekt der energetischen Effizienzsteigerung und der Minimierung von Nebenprodukten im Vordergrund. Ein Ziel der Erfindung ist es somit, ein verbessertes Verfahren sowie ein verbessertes System zur Gewinnung eines Synthesegases aus Abfallprodukten bereitzustellen, das auf eine effiziente Nutzung von Abfällen und eine Minimierung des Energieeinsatzes abzielt.

Die Aufgabe wird durch ein Verfahren gemäß des Anspruchs 1 gelöst. Vorteilhafte Weiterbildungen ergeben sich aus den Unteransprüchen, der Beschreibung und den Figuren.

Entsprechend wird ein Verfahren zur Gewinnung eines Synthesegases aus mindestens einem Abfallprodukt über eine Vergasungsreaktion in Verbindung mit einer Reformierungsreaktion unter einer Rückführung thermischer Energie vorgeschlagen. Das Verfahren umfasst einen ersten Schritt S1 der Zuführung eines Aufgabematerials und eines ersten und/oder zweiten Oxidationsmittels in einen Vergasungsreaktor, wobei das Aufgabematerial insbesondere mindestens ein festförmiges, flüssiges und/oder gasförmiges Abfallprodukt umfasst. Zudem umfasst das Verfahren einen zweiten Schritt S2 der Vergasung des Aufgabematerials in dem Vergasungsreaktor durch das erste und/oder zweite Oxidationsmittel unter Zuführung thermischer Energie in ein Kohlenwasserstoffgasgemisch und in mindestens ein Nebenprodukt, wobei das Nebenprodukt insbesondere Bodenasche und/oder Flugasche umfasst. Das Verfahren umfasst zudem einen dritten Schritt S3 des Zuführens des Kohlenwasserstoffgasgemisches aus dem Vergasungsreaktor in eine Reformer-Einheit und einen vierten Schritt S4 der Aufbereitung des Kohlenwasserstoffgasgemisches in der Reformer-Einheit in ein rohes Synthesegas unter Zugabe des ersten und/oder zweiten Oxidationsmittels und wobei zumindest ein Teil einer in Schritt S4 abgegebenen thermischen Energie in den Vergasungsreaktor rückgeführt wird um zumindest einen Teil der in dem zweiten Schritt S2 zugeführten thermischen Energie bereitzustellen.

Der Begriff Abfallprodukt ist hierin als Edukt des Verfahrens zur Gewinnung eines Synthesegases zu verstehen. Üblicherweise handelt es sich bei den geeigneten Edukten um solche, die im Rahmen vorhergehender Verfahren als Abfallprodukte anfallen. Letzteres ist jedoch nicht zwingende Voraussetzung für die Eignung für das vorliegende Verfahren zur Herstellung von Synthesegas. So umfasst der Begriff Abfallprodukt hierin auch ein Edukt, das tatsächlich nicht aus Abfall gewonnen, sondern gezielt hergestellt worden ist.

Als Abfallprodukte werden hier insbesondere kohlenstoffhaltige Stoffe, insbesondere Methan, Propan, Biogas, Kunststoffe, Restmüll, Holzabfälle, Biomasse, Lignin und/oder Papierabfall, oder Stoffgemische, die die vorstehenden Stoffe enthalten, verstanden, die unter Anderem aus vorhergehenden Prozessen, insbesondere Cracking, Recycling und/oder Fischer-Tropsch-Synthese, als Reststoff, Nebenprodukt und/oder Beiprodukt entstehen.

Eine Kopplung einer Reformer-Einheit mit einem vorgeschalteten Vergasungsreaktor ermöglicht die Gewinnung von hochwertigem Synthesegas aus unterschiedlichsten Abfallprodukten. Durch die Nutzung von Abfallprodukten wird eine nachhaltige Kreislaufwirtschaft gefördert und der Bedarf an wertvollen kohlenwasserstoffhaltigen Rohstoffen zur Synthesegasherstellung reduziert. Die Nutzung von Abfallprodukten als Rohstoff trägt zur Reduktion von Deponieabfällen bei und unterstützt eine nachhaltige Ressourcennutzung. Gleichzeitig wird der Bedarf an fossilen Ressourcen verringert. Das Aufgabematerial kann aus einem speziellen Abfallmaterialbehälter zugeführt werden, der als Zwischenspeicher dient und Lieferengpässe oder Schwankungen ausgleicht. Dies gewährleistet einen gleichmäßigen Betrieb der Anlage und eine konstante Produktion von hochwertigem Synthesegas. Demzufolge kann eine kontinuierliche Auslastung der Anlage und ein konstanter Strom von Synthesegas sichergestellt werden. Dem Prozess können darüber hinaus flüssige und/oder gasförmige Stoffe hinzugefügt werden. Werden nur flüssige Stoffe eingesetzt, kann statt des Vergasungsreaktors ein Verdampfer eingesetzt werden. Die Trennung der Synthesegasherstellung in vier Schritte erlaubt eine geringe Anforderung an das Aufgabematerial und führt gleichzeitig zu einer breiteren Anwendbarkeit des Synthesegases. Ein weiterer Vorteil ist die Möglichkeit, feste Kunststoffabfälle dem Verfahren als Aufgabematerial hinzuzufügen, welche in der Abfallweiterverarbeitung andernfalls aufgrund störender chemischer Eigenschaften gesondert und getrennt behandelt werden müssten. Die Verwendung eines ersten und/oder zweiten Oxidationsmittels, welche zueinander in einem variablen Mischverhältnis dem Vergasungsreaktor zugeführt werden, ermöglicht eine präzise Kontrolle über die Vergasungsbedingungen wie Reaktionstemperatur und die entstehenden Produkte. Dies erlaubt eine gezielte Anpassung der Zusammensetzung des Synthesegases. Darüber hinaus können die Vergasungs- und Reformierungsbedingungen präzise gesteuert werden. Dies verbessert die Anpassbarkeit des Verfahrens an unterschiedliche Ausgangsstoffe und Produktanforderungen. Die Vergasung des Aufgabenmaterials in ein Kohlenwasserstoffgasgemisch und in mindestens ein Nebenprodukt stellt in Schritt S2 den initialen Herstellungsschritt von Synthesegas aus dem Aufgabematerial dar. Die Vergasung ist eine endotherme Reaktion. Bei der Vergasung wird durch eine chemische Umwandlung unter Zuführung thermischer Energie ein aufgegebener kohlenstoffhaltiger Energieträger in ein gasförmiges Kohlenwasserstoffgasgemisch, sowie Nebenprodukte, umgesetzt. Die Vergasung findet insbesondere bei einer Temperatur von 400-650°C statt. Die Rückführung von thermischer Energie aus der Reformer-Einheit in den Vergasungsreaktor reduziert den externen Energiebedarf der Vergasung in Schritt S2 und erhöht die Gesamtenergieeffizienz des Verfahrens. Dies führt zu einer kosteneffizienten und nachhaltigen Prozessgestaltung. Darüber hinaus ermöglicht die Rückkopplung thermischer Energie eine gleichmäßige Versorgung des Vergasungsreaktors mit thermischer Energie, was Schwankungen im Energieeintrag minimiert und eine stabile Synthesegasproduktion ermöglicht.

Zur Herstellung eines rohen Synthesegases wird das Kohlenwasserstoffgasgemisch in Schritt S3 in eine Reformer-Einheit geleitet. Die im Anschluss stattfindende Aufbereitung des Kohlenwasserstoffgasgemisches im Schritt S4 in der Reformer-Einheit führt zum Erhalt des rohen Synthesegases unter Zugabe eines weiteren ersten und/oder zweiten Oxidationsmittels. Das in Schritt S4 hergestellte Synthesegas weist eine für eine Vielzahl von Anwendungen geeignete Reinheit auf, beispielsweise für chemische Synthesen.

In einem vierten Schritt S4 wird ein Teil der im rohen Synthesegas vorhandenen thermischen Energie abgeführt und in den Vergasungsreaktor zurückgeführt. Diese rückgeführte thermische Energie stellt einen Teil der in S2 benötigten thermischen Energie bereit, was wiederum die die Energieeffizienz des Verfahrens steigert.

In einer alternativen Ausführungsform umfasst das Verfahren einen ersten Schritt S1 der Zuführung eines im Wesentlichen beziehungsweise ausschließlich gasförmigen Aufgabematerials in eine Reformer-Einheit, wobei das gasförmige Aufgabematerial Kohlenwasserstoffgasgemische umfasst. Zudem umfasst das Verfahren einen nachfolgenden Schritt S4 der Aufbereitung des im Wesentlichen beziehungsweise ausschließlich gasförmigen Aufgabematerials in der Reformer-Einheit in ein rohes Synthesegas unter Zugabe eines ersten und/oder zweiten Oxidationsmittels und wobei zumindest ein Teil einer in Schritt S4 abgegebenen thermischen Energie rückgeführt wird.

In einer weiteren bevorzugten Ausführungsform des Verfahrens umfasst der Schritt S4 der Aufbereitung des Kohlenwasserstoffgasgemisches in einer Reformer-Einheit neben einer Reformierung des Kohlenwasserstoffgasgemisches in ein rohes Synthesegas in einem Plasmareformer zumindest einen Schritt aus dem Schritt S44, wobei Schritt S44 eine Kühlung des Synthesegases umfasst, dem Schritt S444, wobei Schritt S444 eine Regulation der Temperatur des rohen Synthesegases in einer thermischen Verweilkammer zur Erhöhung der Reaktionsausbeute umfasst und einem Schritt S4444, wobei Schritt S4444 ein Abschrecken des rohen Synthesegases in einer Abkühlzone umfasst.

Eine Kühlung des Synthesegases in Schritt S44 kann durch einen Wärmeübertrager stattfinden, wobei der Wärmeübertrager die thermische Energie über ein Wärmeträgermedium dem Gesamtsystem wieder zurückführen kann. Die Verwertung der während der Abkühlung des rohen Synthesegases abgegebenen thermischen Energie ermöglicht eine gesteigerte Energieeffizienz des Verfahrens. Die Positionierung eines Wärmeübertragers zwischen der thermischen Verweilkammer und der Abkühlzone ermöglicht die maximale Ausnutzung der Abwärme des nahegelegenen Plasmareformers und der Wärmeenergie des produzierten Synthesegases, ohne die Reaktionen im Gesamtsystem zu beeinträchtigen. Die Regulation der Temperatur in einer thermischen Verweilkammer in S444 dient der Erhöhung der Reaktionsausbeute, dem Vernichten von im Gas befindlichen Schadstoffen, sowie der Regelung der Produktzusammensetzung des rohen Synthesegases. Dabei wird in der thermischen Verweilkammer nur geringfügig thermische Energie benötigt, um die Temperatur des rohen Synthesegases aufrechtzuerhalten. Das Abschrecken des rohen Synthesegases in einer Abkühlzone in Schritt S4444 ermöglicht eine schnelle Absenkung der Temperatur des heißen rohen Synthesegases. Dabei wird dem rohen Synthesegas die vorhandene thermische Energie schnell entzogen. So finden keine ungewollten weiteren Reaktionen im Gas statt. Dabei stellt die Wasserkühlung durch Eindüsung eine kostengünstige Möglichkeit dar. Ein weiterer Vorteil ist, dass die Wasserkühlung die Qualität des Synthesegases nicht beeinträchtigt.

In einer weiteren bevorzugten Ausführungsform des Verfahrens wird der Teil der in Schritt S4 abgegebenen Energie über ein erstes und/oder zweites Oxidationsmittel als Wärmeträgermedium in den Vergasungsreaktor rückgeführt.

Eine gezielte Rückführung der in Schritt S4 abgegebenen Energie in den Vergasungsreaktor über ein erstes/oder zweites Oxidationsmittel ermöglicht eine erhebliche Steigerung der Effizienz des Verfahrens. Durch diese Integration wird die thermische Energie optimal genutzt, wodurch der externe Energiebedarf weiter reduziert wird. Die Rückführung über das Oxidationsmittel trägt zudem zu einer flexibleren Regelung des Vergasungsprozesses bei, da die eingebrachte Energie präzise dosiert und gleichmäßig verteilt werden kann. Diese Ausgestaltung erhöht nicht nur die Prozessstabilität, sondern ermöglicht auch eine feinere Anpassung der Reaktionsbedingungen, was zur Erzeugung eines gleichmäßig hochwertigen Synthesegases beiträgt.

In einer weiteren bevorzugten Ausführungsform des Verfahrens wird das rückgeführte erste und/oder zweite Oxidationsmittel zur Rückführung der thermischen Energie über einen Wärmeübertrager, insbesondere einen Strahlungswärmeübertrager oder einen Keramikwärmeübertrager zwischen der thermischen Verweilkammer und der Abkühlzone, erhitzt.

Die Nachbereitung des rückgeführten erste und/oder zweite Oxidationsmittel über einen Wärmeübertrager ermöglicht den Vorteil einer effizienten Nachbereitung des rückgeführten ersten und/oder zweiten Oxidationsmittels, wodurch dessen Qualität und Reaktivität für den Vergasungsprozess optimiert werden. Die Nutzung des Wärmeübertragers, beispielsweise in Form eines Verdampfers, wie beispielsweise einen Strahlungswärmeübertrager oder eines Keramikwärmeübertrager, gewährleistet eine effektive Wärmeübertragung aus der thermischen Verweilkammer oder der Abkühlzone. Dadurch wird die thermische Energie aus dem Prozess sinnvoll weiterverwendet, was die Energieeffizienz steigert und den Gesamtenergiebedarf des Verfahrens senkt. Zudem sorgt die Nachbereitung im Wärmeübertrager für eine homogene Konditionierung des Oxidationsmittels, was eine stabile und kontrollierbare Reaktion im Vergasungsreaktor ermöglicht. Dies trägt zu einer verbesserten Prozessstabilität, einer gleichmäßigen Synthesegasqualität und einer Verlängerung der Lebensdauer der Prozesskomponenten bei.

In einer Weiterbildung des Verfahrens erfolgt die Rückführung der thermischen Energie über einen Wärmeübertrager zwischen der thermischen Verweilkammer und der Abkühlzone, wobei der Wärmeübertrager ein Medium in einem Zwischenkreislauf erhitzt und wobei das Medium anschließend diese Wärme durch mindestens einen zweiten Wärmeübertrager an mindestens eine Wärmesenke abgibt, wobei die mindestens eine Wärmesenke eine Wärmesenke mit einem Strom an erstem und/oder zweitem Oxidationsmittel umfasst.

Die Nutzung eines Zwischenkreislaufs gefüllt mit einem Wärmeträgermedium zur Wärmeübertragung der Abwärme des Plasmareformers auf den Oxidationsmittelstrom bietet den Vorteil geringerer Verluste bei einer möglichen weit auseinanderliegenden Positionierung des Abwärme- und Oxidationsmittelkreislaufs. Zudem ist die Kontaminationsgefahr zwischen den beiden Kreisläufen geringer. Die Temperaturniveaus des Oxidationsmittel- und Abwärmekreislaufs können durch den Zwischenkreislauf frei reguliert werden. Dadurch kann die Beschädigung des Wärmeübertragers durch zu hohe Temperaturen ausgeschlossen werden. Die Abgabe von Prozesswärme an weitere Verbraucher wird außerdem ermöglicht.

In einer Weiterbildung des Verfahrens ist zwischen dem Wärmeübertrager und dem Vergasungsreaktor zumindest ein Überhitzer umfasst.

Durch Einsatz zumindest eines Überhitzers zwischen dem Wärmeübertrager und dem Vergasungsreaktor kann das erste und/oder zweite Oxidationsmittel weiter erwärmt werden, insbesondere auf 650°C, um den Wärmeeintrag durch das erste und/oder zweite Oxidationsmittel in den Vergasungsreaktor weiter zu steigern. Dies senkt wiederum den Primärenergiebedarf des Vergasungsreaktors und stellt eine Effizienzsteigerung des Gesamtprozesses dar. Ferner dient der Einsatz zumindest eines Überhitzers der Steuerung der Vergasungsbedingungen zur Regelung der Menge und Zusammensetzung an entstehendem Kohlenwasserstoffgasgemisch.

In einer weiteren bevorzugten Ausführungsform des Verfahrens beschleunigt zumindest ein Teil des nachbereiteten ersten und/oder zweiten Oxidationsmittel den Verfahrensschritt S2.

Die gezielte Verwendung des aufbereiteten ersten und/oder zweiten Oxidationsmittels erhöht die Reaktionsgeschwindigkeit und Effizienz des Vergasungsprozesses, wodurch eine schnellere und vollständigere Umwandlung des Aufgabematerials in ein Kohlenwasserstoffgasgemisch erreicht wird. Grund dafür ist neben dem Wärmeeintrag ein schnellerer Abtransport der Reaktionsprodukte aus dem Vergasungsreaktor. Dies verbessert nicht nur die Produktivität des Verfahrens, sondern auch die Energieausnutzung und die Konsistenz der Synthesegasqualität. Zusätzlich ermöglicht die beschleunigte Reaktion eine Reduzierung der Verweilzeit im Vergasungsreaktor, was zu einem höheren Durchsatz und einer effizienteren Nutzung der Anlagenressourcen führt.

In einer weiteren bevorzugten Ausführungsform umfasst das Verfahren eine Absonderung der während der Vergasung in S2 entstehenden Bodenasche und eine zumindest teilweise Abscheidung und Rückführung einer während der Umwandlung entstehenden und von dem Kohlenwasserstoffgasgemisch getragenen Flugasche in den Vergasungsreaktor, wobei bevorzugt die Absonderung ferner eine Absonderung der Bodenasche über ein Ascheentladesystem umfasst, wobei bevorzugt der Schritt der Abscheidung und Rückführung das Abscheiden der sich nach der Vergasung im Kohlenwasserstoffgasgemisch befindlichen Flugasche über eine Aschefalle, insbesondere über einen Zyklon umfasst..

Aschearten wie Bodenasche oder Flugasche entstehen bei Vergasungsprozessen als Nebenprodukte. Diese Nebenprodukte weisen durch die hohe Reaktionstemperatur in dem Vergasungsreaktor auch eine hohe Mediumstemperatur auf, welche bei einer Abscheidung und Rückführung in den Reaktor zum Erhalt des hohen Temperaturniveaus bei der Vergasung beitragen. Die Abscheidung und Rückführung dieser heißen Nebenprodukte trägt zu einer erhöhten Reinheit des Endprodukts der Vergasung und einer erhöhten Energieeffizienz des Gesamtprozesses bei.

Durch ein Ascheentladesystem zur Absonderung der Bodenasche wird eine kontinuierliche und störungsfreie Betriebsweise des Vergasungsreaktors sichergestellt, da Ablagerungen und Verstopfungen vermieden werden. Das Ascheentladesystem ermöglicht eine effiziente und kontrollierte Abführung des Nebenprodukts, wodurch die Betriebsbedingungen stabil gehalten und die Lebensdauer der Anlage verlängert werden. Zudem wird durch die getrennte Absonderung der Bodenasche deren Weiterverwertung oder umweltgerechte Entsorgung erleichtert. Dies trägt zu einer verbesserten Nachhaltigkeit des Gesamtprozesses bei, da wertvolle Ressourcen zurückgewonnen oder Abfälle fachgerecht behandelt werden können. Zudem kann dieses Ascheentladesystem die abgesonderte Bodenasche wieder zurück in den Vergasungsreaktor transportieren, um das hohe Temperaturniveau der Asche bei der Vergasung wiederzuverwenden.

Die während der Vergasung entstehenden Flugaschepartikel können mittels Aschefallen, wie etwa Zyklone, oder weiteren Filtermethoden aus dem Endprodukt des Kohlenwasserstoffgasgemischs entzogen werden. Durch die effiziente Entfernung der Flugasche wird die Reinheit des Kohlenwasserstoffgasgemisches erhöht, was die Qualität des daraus gewonnenen Synthesegases verbessert. Dies dient einerseits der Reinheit des Kohlenwasserstoffgasgemischs im Hinblick auf die Weiterverarbeitung und andererseits einer möglichen Weiterverwertung eines eigentlich ungewollten Nebenproduktes. Der Einsatz eines Zyklons ermöglicht eine zuverlässige und mechanisch robuste Trennung von Partikeln, selbst bei hohen Temperaturen und Strömungsgeschwindigkeiten, wodurch die Prozessstabilität gesteigert wird. Zusätzlich wird durch die gezielte Abscheidung und Rückführung der Flugasche eine mögliche Ablagerung in nachgelagerten Komponenten verhindert, was deren Wartungsaufwand reduziert, und die Lebensdauer der Anlage verlängert. Die Rückführung der Flugasche ermöglicht zudem eine weitere Verwertung von Reststoffen, was die Ressourceneffizienz des Verfahrens erhöht und zur Minimierung von Abfall beiträgt. Zudem dient die Absonderung und Rückführung der sich in dem Strom des Kohlenwasserstoffgasgemisches befindlichen Flugasche vor dem Plasmareformer der Verwertung eines Nebenproduktes zur Steigerung der Energieeffizienz des Gesamtprozesses. Dabei wird das hohe Temperaturniveau der Flugasche im Vergasungsreaktor genutzt, um den hohen Energieverbrauch zum Aufheizen auf die dort nötige Reaktionstemperatur abzusenken.

In einer weiteren bevorzugten Ausführungsform des Verfahrens wird ein Verhältnis der Bestandteile von Wasserstoff, H2, und Kohlenmonoxid, CO, in dem Synthesegas über ein Mischverhältnis des ersten Oxidationsmittels und des zweiten Oxidationsmittels geregelt.

Das Verhältnis des Wasserstoffs und des Kohlenmonoxids in dem Synthesegas, auch Synthesegasverhältnis genannt, wird über eine Regelung des Mischverhältnisses der zugeführten Oxidationsmittel im Vergasungsreaktor und der Reformer-Einheit geregelt. Hierbei kann das Synthesegasverhältnis über das Mischverhältnis von Wasserdampf und Kohlenstoffdioxid geregelt werden. Dies ermöglicht eine variable Anpassung der Synthesegaszusammensetzung und Qualität, woraus auch eine konstante Produktqualität an Synthesegas sichergestellt werden kann. Ein konstantes Mischverhältnis der Oxidationsmittel würde Anpassung des Systems aufgrund schwankender Zusammensetzungen des Aufgabematerials verhindern. In etablierten Prozessen wird das Mischverhältnis von Kohlenstoffmonoxid und Wasserstoff über die Wassergas-Shift-Reaktion eingestellt. Dies ist hierbei nicht notwendig, was wiederum Ressourcen einspart und der Energieeffizienz des Gesamtsystems dient. Die Regelung des Synthesegasverhältnisses durch das Mischverhältnis der Oxidationsmittel wird durch den Einsatz einer nicht-katalytischen, also thermischen oder plasmabasierten, Reformierung in Schritt S4 ermöglicht.

In einer weiteren bevorzugten Ausführungsform des Verfahrens umfasst das Verfahren nach Schritt S4 eine Kühlung des rohen Synthesegases in einer Kondensator-Einheit unter Abscheidung eines Kondensates.

Dieser Schritt der Abkühlung in einer Kondensator-Einheit dient der Aufbereitung des rohen Synthesegases zur Abscheidung von möglichen noch vorhandenen Flugstaubpartikel, Salzen sowie flüchtigen Schwermetallen und verbleibendem Dampf im Strom des rohen Synthesegases. Die abgeschiedenen Stoffe werden schließlich durch das Kondensat aus dem Synthesegasstrom entfernt, wodurch ein reines Synthesegas gewonnen wird. Darüber hinaus kann durch die gezielte Temperaturabsenkung das Synthesegas für nachfolgende Prozessschritte optimal aufbereitet werden, was wiederum die Effizienz und Flexibilität des Verfahrens erhöht. Die Abscheidung des Kondensates ermöglicht zusätzlich die Entfernung unerwünschter Begleitstoffe wie Wasser oder kondensierbare Verbindungen, wodurch die Reinheit und Qualität des Synthesegases verbessert werden. Zudem trägt die Kondensator-Einheit zu einer effektiven Wärmerückgewinnung bei, indem überschüssige Wärme aus dem Gasstrom entzogen wird, was die Energieeffizienz des gesamten Prozesses steigert. Diese Integration minimiert auch den Aufwand für die nachgeschaltete Gasreinigung.

In einer weiteren bevorzugten Ausführungsform des Verfahrens liegt der Betriebsdruck des Vergasungsreaktors und der Betriebsdruck des Plasmareaktors zwischen 1 bar und 20 bar, bevorzugt 1,5 und 4 bar, Absolutdruck.

Der benötigte Betriebsdruck des Verfahrens in den Reaktoren liegt zwischen 1 bar und 20 bar Absolutdruck, um eine hohe Reaktionsausbeute an Synthesegas zu erhalten und die Reaktionsschritte der Vergasung und Reformierung zu ermöglichen. Darüber hinaus ist es möglich, den Betriebsdruck des Verfahrens in den Reaktoren zwischen 1,5 bis 4 bar Absolutdruck einzustellen. Ferner verlaufen die Prozessschritte im Wesentlichen isobar. Dabei müssen auch Verdichter eine geringere Arbeit leisten, was sich in einem geringeren Energieverbrauch widerspiegelt. Zudem können in diesem moderaten Druckbereich Niederdruck-Rohrleitungen verwendet werden, welche einen geringeren Kostenfaktor darstellen als Hochdruckleitungen. Er reduziert den mechanischen Belastungen auf Reaktorwände und Komponenten, was die Lebensdauer der Anlage verlängert und den Wartungsaufwand verringert. Die Wahl eines Betriebsdrucks in einem niedrigen Bereich verringert darüber hinaus die Anforderungen an eingesetzte Plasmareaktoren im Schritt S4, da ein hoher Gasdruck den stabilen Betrieb von Plasmareaktoren erschwert.

In einer weiteren bevorzugten Ausführungsform des Verfahrens umfasst der Schritt der Regulation der Temperatur des rohen Synthesegases in der thermischen Verweilkammer ein Halten der Temperatur des rohen Synthesegases für mindestens zwei Sekunden bei mindestens 850°C, bevorzugt 1.200°C.

Das Warmhalten des rohen Synthesegases bei einer Mindesttemperatur von 850°C, bevorzugt 1.200°C, für zwei Sekunden stellt eine nach §6 der siebzehnten Verordnung zur Durchführung des Bundes-Immissionsschutzgesetzes normgerechte Verbrennungsbedingung für Abfallverbrennungsanlagen sicher. Dadurch werden bestimmte Grenzwerte an SchadstoffEmissionen sichergestellt. Außerdem kann durch das Halten der Temperatur die Ausbeute der Reformierungsreaktion erhöht werden.

In einer weiteren bevorzugten Ausführungsform des Verfahrens umfasst das erste Oxidationsmittel Wasserdampf, H2O, und das zweite Oxidationsmittel Kohlenstoffdioxid, CO2.

Als Reaktionspartner und Oxidationsmittel in der Vergasung und der Reformierung werden Wasserdampf und Kohlenstoffdioxid verwendet. Die Oxidationsmittel Wasserdampf und Kohlenstoffdioxid werden in dem Gesamtsystem bei der Teilnahme in den Reaktionen in einem einstellbaren Mischungsverhältnis hinzugeführt, wobei das Mischverhältnis auch aus einem Reinstoff bestehen kann. Dabei beeinflussen diese maßgeblich die Reaktionstemperatur und die Produktzusammensetzung. Die Oxidationsmittel Wasserdampf und Kohlenstoffdioxid sind in der Technik bereits vielfach erprobt, es sind nur bedingte Sicherheitsvorkehrungen notwendig und diese sind günstig erhältlich. Bei Kohlenstoffdioxid findet zudem eine Verwertung eines eigentlichen Schadstoffes statt. Wasserdampf trägt durch die Bereitstellung von Wasserstoff bei der Reformierungsreaktion zur Erhöhung des Wasserstoff-Gehalts im Synthesegas bei, wodurch ein hochwertiges und vielseitig einsetzbares Produkt entsteht. Gleichzeitig ermöglicht Kohlenstoffdioxid als zweites Oxidationsmittel die Nutzung eines potenziellen Abfall- oder Nebenprodukts aus anderen Prozessen, was zur Förderung der Kreislaufwirtschaft und zur Reduktion von Kohlenstoffdioxid-Emissionen beiträgt. Die Kombination beider Oxidationsmittel ermöglicht eine präzise Steuerung der Vergasungs- und Reformierungsbedingungen, da sowohl die Reaktionstemperatur als auch die Zusammensetzung der entstehenden Produkte flexibel angepasst werden können. Zudem wird durch die gleichzeitige Verwendung von Wasserdampf und Kohlenstoffdioxid eine effektive Konversion des Aufgabematerials bei der Vergasung erzielt, wodurch die Effizienz des Prozesses erhöht und der Bedarf an externen Ressourcen reduziert wird. Insgesamt führt diese Ausführungsform zu einer nachhaltigeren, kosteneffizienten und umweltfreundlicheren Synthesegasherstellung.

In einer weiteren bevorzugten Ausführungsform des Verfahrens erfolgt die Vergasung in Schritt S2 in einer Wirbelschichtvergasung oder einer Festbettvergasung oder einer Schneckenvergasung oder in einem Verdampfer.

Das überhitzte Oxidationsmittel dient bei dem Einsatz einer Wirbelschichtvergasung im Vergasungsreaktor als ein Verflüssiger des Feststoffbettes im Vergasungsreaktor, wodurch die Vergasung schneller abläuft. Dies wird bewirkt durch die hohe Mediumstemperatur des überhitzten Oxidationsmittels. Die Vergasung in einer Wirbelschichtvergasung bietet den Vorteil einer hohen Variabilität im Aufgabematerial. Zudem besteht eine gute Regelbarkeit über den Einsatzstoff- und Gaseintrag im Reaktor sowie eine gute Skalierbarkeit über einen breiten Leistungsbereich. Bei einer Schneckenvergasung wird ein Reaktor mit drehender Schnecke eingesetzt, wobei diese Schnecke in einer besonderen Geometrie ausgebildet ist. Dadurch kann ein optimaler Wärmeübergang des Einsatzproduktes an der Reaktorwand und eine gute Durchmischung sichergestellt werden. Weiterhin können vergleichbare Verfahren zur Vergasung eingesetzt werden.

In einer weiteren bevorzugten Ausführungsform des Verfahrens wird der Vergasung in Schritt S2 ein Stoff, insbesondere ein Metallcarbonat, Metalloxid, Metallhydrid oder Hydrogencarbonat, zum Abbinden von entstehenden Sauergasen zugeführt.

Das Zuführen von Stoffen, insbesondere Metallcarbonate, Metalloxide, Metallhydride oder Hydrogencarbonate, in den Vergasungsreaktor, dient der Abbindung von Sauergasen, welche bei der Vergasungsreaktion entstehen können. Besonders beim Einsatz von Polyvinylchlorid enthaltenden Stoffen können Sauergase, insbesondere Wasserstoffchlorid oder Wasserstofffluorid entstehen, welche in fortfolgenden Prozessschritten zur Korrosionsproblemen führen können.

In einer weiteren bevorzugten Ausführungsform des Verfahrens wird während der Aufbereitung ferner eine Bogenentladung im Plasmareformer durchgeführt.

Die Bogenentladung erzeugt ein hochenergetisches Plasma, das eine effiziente Aktivierung und Zersetzung von Molekülen ermöglicht, insbesondere von schwer umsetzbaren oder stabilen Verbindungen im Kohlenwasserstoffgasgemisch. Dies führt zu einer verbesserten Reaktionseffizienz und einer höheren Ausbeute an wertvollen Synthesegasbestandteilen wie Wasserstoff und Kohlenmonoxid. Durch den Einsatz der Plasmareaktion können auch spezifische Reaktionswege gezielt angeregt werden, was eine präzise Steuerung der Produktzusammensetzung erlaubt. Darüber hinaus trägt die hohe Temperatur und Energie des Plasmas dazu bei, die Umwandlung von Reststoffen und Nebenprodukten zu optimieren, wodurch die Gesamtwirtschaftlichkeit und Nachhaltigkeit des Verfahrens gesteigert werden.

In einer weiteren bevorzugten Ausführungsform umfasst das Verfahren eine Abscheidung durch Kondensation und Rückführung von im Synthesegas befindlichen Störgase zu der Reformer-Einheit, wobei die Störgase bevorzugt Kohlenstoffdioxid umfassen, wobei das Kohlenstoffdioxid bevorzugt das zweite Oxidationsmittel zur Rückführung der in Schritt S4 anfallenden thermischen Energie bildet.

Die für Synthesegas nötigen Reinheitsanforderungen wird durch eine Abscheidung von Störgasen, die sich in dem Strom des Synthesegases befinden können, erreicht. Als Störgas tritt insbesondere Kohlenstoffdioxid auf, wobei auch weitere Gase im Produktstrom des Synthesegases vorhanden sein können. Die Abscheidung von Störgasen kann mittels verschiedener Techniken, wie etwa einer Wäsche, Membrantrennung oder Druck- beziehungsweise Temperatur-Wechsel-Adsorption ausgeführt sein. Die gewählte Abscheidetechnik richtet sich nach den Reinheitsanforderungen des möglichen Folgeprozesses. Soll das Synthesegas beispielsweise im Anschluss in der Phosgen-Route eingesetzt werden, muss eine fast vollständige Abscheidung von Kohlenstoffdioxid erfolgen, da Kohlenstoffdioxid nur im ppm-Bereich toleriert werden kann.

In einer weiteren bevorzugten Ausführungsform umfasst das in Schritt S1 zugeführte Aufgabematerial im Wesentlichen beziehungsweise ausschließlich mindestens ein gasförmiges Abfallprodukt und der Schritt S2 der Vergasung des Aufgabematerials entfällt.

In dieser Ausführungsform umfasst das in Schritt S1 zugeführte Aufgabematerial im Wesentlichen beziehungsweise ausschließlich mindestens ein gasförmiges Abfallprodukt. Daraus resultiert, dass ein nachfolgender Schritt S2 der Vergasung des Aufgabematerials nicht notwendig ist, da sich das Aufgabematerial bereits im gasförmigen Aggregatzustand befindet. Dadurch ist die in Schritt S2 eigentlich notwendige hohe Primärenergie nicht nötig und der Energiebedarf des Verfahrens sinkt.

Entsprechend wird eine Vorrichtung zur Gewinnung eines Synthesegases aus mindestens einem Abfallprodukt über eine Vergasungsreaktion in Verbindung mit einer Reformierungsreaktion unter einer Rückführung thermischer Energie vorgeschlagen. Die Vorrichtung umfasst eine Lagerung eines Aufgabematerials und eines ersten und/oder zweiten Oxidationsmittels, wobei das Aufgabematerial insbesondere mindestens ein festförmiges, flüssiges oder/und gasförmiges Abfallprodukt umfasst. Zudem umfasst die Vorrichtung einen Vergasungsreaktor zur Vergasung des Aufgabematerials, durch das erste und/oder zweite Oxidationsmittels unter Zuführung thermischer Energie in ein Kohlenwasserstoffgasgemisch und in mindestens ein Nebenprodukt, wobei das Nebenprodukt insbesondere Bodenasche und/oder Flugasche umfasst. Die Vorrichtung umfasst außerdem eine Reformer-Einheit zur Aufbereitung des Kohlenwasserstoffgasgemisches in ein rohes Synthesegas unter weiterer Zugabe des ersten und/oder zweiten Oxidationsmittels und eine Kühleinrichtung zum Kühlen des rohen Synthesegases, wobei zumindest ein Teil der in der Reformer-Einheit abgegebenen thermischen Energie in den Vergasungsreaktor rückgeführt wird um zumindest einen Teil der in den Vergasungsreaktor zugeführten thermischen Energie bereitzustellen.

Die Vorrichtung führt dabei die in einem Abfallmaterialbehälter gelagerten Abfallprodukte, welche festförmig sind, jedoch auch in flüssigem oder gasförmigem Zustand vorliegen können, dem Vergasungsreaktor zu. Im Anschluss wird im Vergasungsreaktor der Prozessschritt der Vergasung des Aufgabematerials und der Oxidationsmittel zu einem Kohlenwasserstoffgasgemisch und Nebenprodukten durchgeführt. Dabei werden als Nebenprodukte neben anfallender Wärme auch Bodenasche und/oder Flugasche gebildet, welche jedoch dem Strom des Kohlenwasserstoffgasgemisches entzogen werden und dem Vergasungsreaktor wieder zugeführt werden, um die Restwärme der Stoffe nach der Vergasung aus Gründen der Energieeffizienz wiederzuverwerten. Im Anschluss wird der Kohlenwasserstoffstrom der Reformer-Einheit zugeführt, in welcher die Reformierung des Kohlenwasserstoffstromes und der Oxidationsmittel zu einem rohen Synthesegas stattfindet. Zudem finden in der Reformer-Einheit Schritte der Aufbereitung des rohen Synthesegases statt, um zuletzt ein Synthesegas zu gewinnen.

In einer bevorzugten Ausführungsform ist die Vorrichtung derart konfiguriert, um das Verfahren nach einem der vorigen Ausführungsformen auszuführen.

Darüber hinaus kann das Verfahren nach Schritt S4 einen Waschschritt des sauren Synthesegases mit einer Waschlösung, insbesondere Selexol und/oder Rectisol, in einer Waschsäule zur Bereitstellung des Synthesegases umfassen.

Durch einen Waschschritt des sauren Synthesegases mit einer Waschlösung, wie Selexol und/oder Rectisol, wird das saure Synthesegas effektiv von unerwünschten Verunreinigungen wie Kohlenstoffdioxid, Schwefelwasserstoff und anderen sauren Gasen befreit, wodurch ein Synthesegas mit hoher Reinheit erzeugt wird. Dies erhöht nicht nur die Qualität des Synthesegases, sondern auch dessen Vielseitigkeit für nachfolgende Anwendungen, wie z.B. in der chemischen Industrie oder der Energieerzeugung. Die Verwendung von Selexol und Rectisol als Waschlösungen ermöglicht eine selektive Absorption der sauren Komponenten und eine präzise Steuerung des Waschprozesses. Dadurch wird der Bedarf an zusätzlichen Reinigungsschritten verringert, und die Betriebskosten werden gesenkt. Darüber hinaus trägt der Waschprozess zur Erhöhung der Anlagensicherheit bei, indem die Konzentration schädlicher oder korrosiver Gase im Synthesegas minimiert wird. Insgesamt führt dies unter anderem zu einer besseren Produktqualität.

Nach einem Waschschritt des sauren Synthesegases zu Synthesegas kann das Verfahren zunächst eine Abscheidung von Störgasen, sowie ein Speichern des Synthesegases in einem Speichertank und vorzugsweise Komprimieren des Synthesegases umfassen.

Die Speicherung des Synthesegases in einem Speichertank ermöglicht eine Pufferung des Produktstromes. Mittels der Pufferung kann besser auf einen schwankenden Bedarf an Synthesegas reagiert werden. Darüber hinaus können Schwankungen in der Herstellung des Synthesegases ausgeglichen werden. Das Komprimieren des Synthesegases ermöglicht neben der damit verbundenen Verringerung des benötigten Volumens zur Speicherung auch die direkte Einleitung in Gasnetze und allgemein Pipelines auf geregelten Druckniveaus.

### Kurze Beschreibung der Figuren

Bevorzugte weitere Ausführungsformen der Erfindung werden durch die nachfolgende Beschreibung der Figuren näher erläutert. Dabei zeigen:
- Figur 1a und 1b: schematisch jeweils ein Flussdiagramm eines Verfahrens zur Gewinnung eines Synthesegases aus Abfallprodukten unter Rückführung thermischer Energie;
- Figur 2a: schematisch ein Verfahren zur Gewinnung eines Synthesegases aus Abfallprodukten unter Rückführung thermischer Energie;
- Figur 2b: schematisch ein Verfahren zur Gewinnung eines Synthesegases aus Abfallprodukten unter Rückführung thermischer Energie mit einem Zwischenkreislauf;
- Figur 3: schematisch eine Nachbereitung eines Synthesegases; und
- Figur 4: schematisch ein Verfahren zur Gewinnung eines Synthesegases aus Abfallprodukten und der Nachbereitung des Synthesegases.

### Detaillierte Beschreibung bevorzugter Ausführungsbeispiele

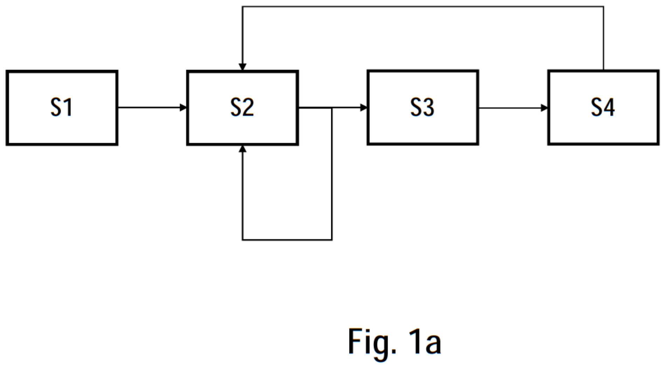

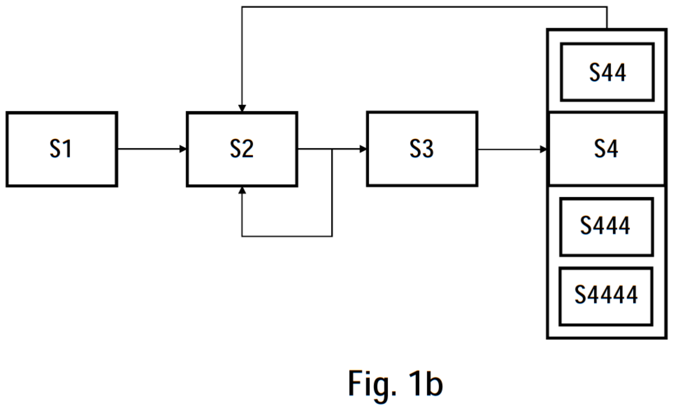

In den Figuren 1a und 1b ist ein Verfahren zur Gewinnung eines Synthesegases aus Abfallprodukten in einem beispielhaften Flussdiagramm dargestellt. Die Flussdiagramme zeigen die vier Schritte S1-S4. Wobei in einem ersten Schritt S1 das Zuführen eines Aufgabematerials, in einem zweiten Schritt S2 die Vergasung des Aufgabematerials, in einem dritten Schritt S3 das Zuführen des Kohlenwasserstoffgasgemisches in eine Reformer-Einheit und in einem vierten Schritt S4 die Aufbereitung des Kohlenwasserstoffgasgemisches in der Reformer-Einheit dargestellt werden.

In dem ersten Schritt S1 werden sowohl das Aufgabematerial als auch ein Oxidationsmittelstrom einem Vergasungsreaktor zugeführt. Der Oxidationsmittelstrom kann dabei aus einem ersten und einem zweiten Oxidationsmittel in einem regelbaren Mischverhältnis bestehen. Das Mischverhältnis kann in beide Stoffrichtungen verändert werden, sodass sowohl Reinstoffe eines ersten oder zweiten Oxidationsmittels als auch eine Mischung aus dem ersten und dem zweiten Oxidationsmittel vorliegen kann. Als Oxidationsmittelstrom wird im genannten Ausführungsbeispiel hier ein Mischverhältnis aus Wasserdampf und Kohlenstoffdioxid verstanden. Darüber hinaus können das erste und zweite Oxidationsmittel als Kohlenstoffmonoxid (CO), Sauerstoff (O2) oder Wasserstoff (H2) ausgebildet sein. Das Aufgabenmaterial kann aus festförmigen, flüssigen und/oder gasförmigen Abfallprodukten zusammengesetzt sein. Beispielsweise können Abfallprodukt festförmige Kunststoffabfälle umfassen. Darüber hinaus können Kohlenstoffquellen aus dem System, wie etwa Kohlenstoffdioxid oder organische Abfälle, wie Biomasse oder Sortierreste als Abfallprodukte dienen. Das Zuführen des Aufgabematerials S1 und des Oxidationsmittelstroms wird mit einem Zulaufsystem ermöglicht. Das Zulaufsystem ist beispielsweise als Förderschnecke realisiert, wobei eine beliebige Art des Zulaufsystems verwendet werden kann, wie etwa Bandförderer, Steigförderer oder Flurförderzeuge.

In einem zweiten Schritt S2 findet die Vergasung des durch den in Schritt S1 zugeführten Aufgabematerials durch den Oxidationsmittelstrom in dem Vergasungsreaktor statt. Aufgrund der endothermen Charakteristika der Vergasungsreaktion in S2 ist es notwendig, thermische Energie zuzuführen Als Reaktionsprodukte entstehen ein Kohlenwasserstoffgasgemisch und mindestens ein Nebenprodukt. Darüber hinaus können auch zwei, drei, vier oder eine beliebige Anzahl an Nebenprodukten entstehen, wobei verschiedene Aschearten die häufigsten Nebenprodukte bilden. Hierbei entstehen als Nebenprodukte Bodenasche und Flugasche. Die externe Zufuhr thermischer Energie in Schritt S2 ist nötig, um die hohen Prozesstemperaturen für die Vergasung bereitzustellen. In dem in Figur 1 dargestellten Beispiel wird die thermische Energie durch einen elektrischen Heizer und somit eine Rückführung von heißem Oxidationsmittel bereitgestellt. Darüber hinaus kann die thermische Energie durch eine beliebige Form der Beheizung oder Rückführung thermischer Energie im System ermöglicht werden. Als Vergasungsreaktor wird in dem in Figur 1 dargestellten Beispiel ein Wirbelschichtvergaser verwendet. Darüber hinaus kann auch ein Flugstromvergaser oder ein Festbettvergaser verwendet werden. Der Absolutdruck während der Reaktion im Vergasungsreaktor liegt zwischen 1 bar bis 20 bar.

Die während der Vergasung in S2 entstehende Bodenasche setzt sich in dem Vergasungsreaktor vom Kohlenwasserstoffgasgemisch auf den Reaktorboden ab. Die abgesetzte Bodenasche wird zudem über ein Ascheentladesystem aus dem Vergasungsreaktor abgesondert.

Die während der Vergasung in einem zweiten Schritt S2 entstehende Flugasche wird aus dem Wirbelschichtvergaser mit dem Kohlenwasserstoffgasgemisch an der Reaktorspitze ausgeleitet. Dabei bildet der Anteil der Flugasche nur eine geringe Menge des Stoffstromes. Der Stoffstrom passiert nach dem Vergasungsreaktor eine Aschefalle, um die Flugasche von dem Kohlenwasserstoffgasgemisch zu trennen. Hierbei ist die Aschefalle durch einen Zyklon ausgebildet. Darüber hinaus kann die Aschefalle über ein beliebiges Absonderungssystem ausgebildet sein, wie etwa Filter oder Adsorption.

In einem dritten Schritt S3 wird das von Asche befreite Kohlenwasserstoffgasgemisch aus dem Vergasungsreaktor in eine Reformier-Einheit geleitet. Das Kohlenwasserstoffgasgemisch wird beispielsweise direkt durch Rohrleitungen in die Reformier-Einheit geleitet, um zu Synthesegas weiterverarbeitet zu werden. In einem dritten Schritt S3 wird dementsprechend die Vergasungsreaktion aus Schritt S2 und die Reformier-Reaktion in Schritt S4 über das vergaste Medium gekoppelt. Darüber hinaus ist es denkbar, Zwischenschritte, wie beispielsweise Filtereinheiten oder Beförderungseinheiten für das Medium in die Kopplung einzubringen.

In einem vierten Schritt S4 wird das Kohlenwasserstoffgasgemisch in der Reformier-Einheit zu rohem Synthesegas aufbereitet. Dabei wird der Reformier-Einheit ein Oxidationsmittelstrom zugegeben, um die Reaktion zu ermöglichen. Der Oxidationsmittelstrom besteht dabei aus einem ersten und zweiten Oxidationsmittel in einem regelbaren Mischverhältnis. Das Mischverhältnis kann in beide Stoffrichtungen verändert werden, sodass Reinstoffe vorliegen können. Die Oxidationsmittel des Oxidationsmittelstroms in S4 entsprechen dem ersten und/oder zweiten Oxidationsmittel des ersten Schrittes S1, wobei das Mischungsverhältnis von dem Mischungsverhältnis des ersten Schrittes S1 abweichen kann. Im dargestellten Beispiel wird als erstes Oxidationsmittel Wasserdampf und als zweites Oxidationsmittel Kohlenstoffdioxid verwendet. Dabei findet in der Reformer-Einheit nach der Zugabe des Oxidationsmittelstroms in einem Plasmareformer die Reformierungsreaktion zu rohem Synthesegas statt. Darüber hinaus kann ein Dampfreformer anstelle des Plasmareformers verwendet werden. Der Plasmareformer wird dabei von Plasmatreibern angetrieben. Diese stellen die notwendige thermische Energie für die hohen Reaktionstemperaturen bereit. Hierbei werden hohe Temperaturen benötigt, sodass die Mediumaustrittstemperatur des Plasmareformers zwischen 1100 °C und 1600 °C liegt. Im Plasmareformer werden das Kohlenwasserstoffgasgemisch und der Oxidationsmittelstrom gemischt und ein nicht-thermisches Plasma erzeugt. Das nicht-thermische Plasma reformiert im Anschluss den Strom an Kohlenwasserstoffgasgemisch und der Oxidationsmittel zu rohem Synthesegas. Der Plasmareformer kann die Reformierung in Form einer Bogenentladung durchführen. Das im Plasmareformer erzeugte Synthesegas besteht aus Kohlenstoffmonoxid und Wasserstoff, wobei deren Mischverhältnis durch das Mischverhältnis des Oxidationsmittelstroms regelbar ist. Der Absolutdruck während der Reaktion im Plasmareformer liegt zwischen 1 bar bis 20 bar. Darüber hinaus sind Betriebsdrücke zwischen 1,5 bar bis 4 bar möglich.

Wie in Figur 1a gezeigt, kann der Wärmeübertrager die in der Reformer-Einheit abgegebene thermische Energie in Schritt S2 zurückgeführt werden. Diese thermische Energie kann wiederum in Schritt S2 für die Vergasung genutzt werden. Wie in Figur 1b gezeigt, kann die Aufbereitung des Kohlenwasserstoffgasgemisches in Schritt S4 die weiteren Schritte S44: Kühlen des rohen Synthesegases, S444: Regulation der Temperatur des rohen Synthesegases in einer thermischen Verweilkammer zur Erhöhung der Reaktionsausbeute, und S4444: Abschrecken des rohen Synthesegases in einer Abkühlzone.

In Schritt S44 wird durch eine Abkühlung des rohen Synthesegases thermische Energie bereitgestellt, die wiederum in Schritt S2 rückgeführt werden kann. In einer Abkühlungsstufe wird ein Teil der in Schritt S4 von dem Plasmareformer an das rohe Synthesegas abgegebenen thermischen Energie zu einem Wärmeübertrager weitergeleitet. Im dargestellten Beispiel ist der Wärmeübertrager ein Strahlungswärmeübertrager aus Keramik. Darüber hinaus können auch Wärmeübertrager aus anderen Werkstoffen wie beispielsweise Eisen oder Edelstahl verwendet werden. Der Wärmeübertrager überträgt dabei die thermische Energie des Synthesegases an einen Oxidationsmittelstrom. Der Oxidationsmittelstrom wird getrennt zugeleitet und/oder aus einem Produktstrom eines Synthesegases durch Kondensation abgeschieden und rückgeführt. Der Oxidationsmittelstrom wird dem Wärmeübertrager zugeführt. Der Oxidationsmittelstrom wird dabei von dem Wärmeübertrager verdampft und überhitzt. Darüber hinaus ist es möglich, ausschließlich den Oxidationsmittelstrom zu verdampfen. Der Wärmeübertrager wird in dieser Ausführung als Verdampfer eingesetzt. Alternativ kann der Wärmeübertrager in Schritt S4 die von dem Plasmareformer abgegebenen thermischen Energie zunächst an einen mit einem Wärmeträgermedium gefüllten Zwischenkreislauf weitergeben. Als Wärmeträgermedium wird dabei ein Thermalöl verwendet, wobei darüber hinaus auch beliebige Wärmeträgermedien wie etwa Salzschmelzen, flüssige Metalle, Wasser, Alkohol-Wasser-Lösungen oder auch Salz-Wasser-Lösungen verwendet werden können. Das Wärmeträgermedium gibt anschließend die thermische Energie über einen weiteren Wärmeübertrager an den Oxidationsmittelstrom ab. Dabei wird der Oxidationsmittelstrom wiederum verdampft, wobei der Oxidationsmittelstrom ebenfalls verdampft und überhitzt werden kann. Die thermische Energie des Oxidationsmittelstroms wird anschließend an den Vergasungsreaktor in Schritt S2 weitergeleitet. Durch das Erhöhen der thermischen Energie des Oxidationsmittelstroms und die Rückführung des Oxidationsmittelstromes wird der Verfahrensschritt S2 beschleunigt. Dabei kann wiederum ein Teil der in Schritt S2 benötigten thermischen Energie bereitgestellt werden.

In einer weiteren Stufe des Schrittes S4 der Aufbereitung des Kohlenwasserstoffgasgemisches wird die Temperatur des rohen Synthesegases in der Reformer-Einheit in einer thermischen Verweilkammer in Schritt S444 reguliert. Diese Regulierung erfolgt dabei durch das Halten der Temperatur bei 850 °C für mindestens zwei Sekunden. Darüber hinaus kann die Regulierung auch bei Temperaturen über 850 °C für länger als zwei Sekunden stattfinden.

In einem weiteren Schritt der Aufbereitung des Kohlenwasserstoffgasgemisches S4 stellt das Abschrecken des rohen Synthesegases in einer Abkühlzone in einem Schritt S4444 dar. Dabei passiert das rohe Synthesegas vor der Abfuhr aus der Reformer-Einheit die Abkühlzone. Zur Abschreckung wird hierbei Wasser verwendet, wobei alternativ auch Öle oder Gase verwendet werden können. Dabei wird das rohe Synthesegas auf ein Temperaturlevel abgekühlt, auf welchem es aus der Reformer-Einheit geleitet werden kann.

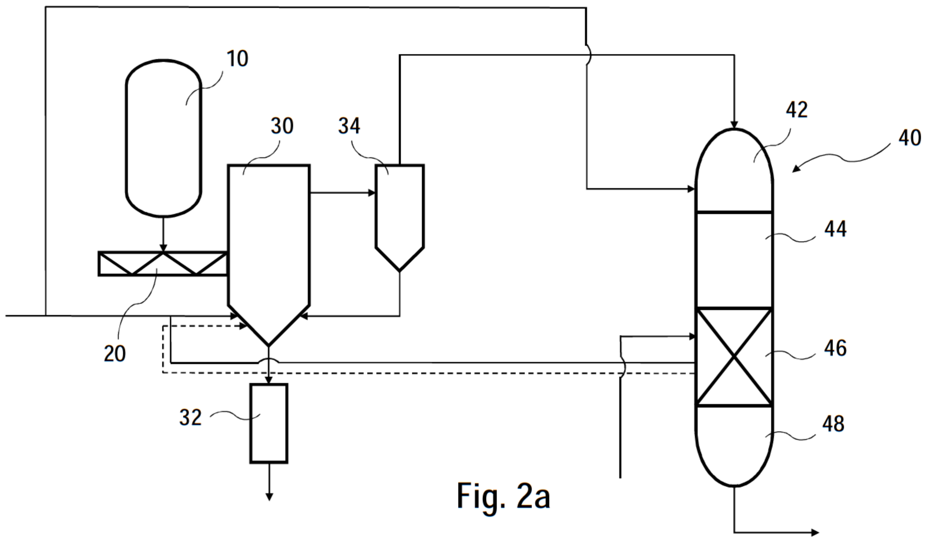

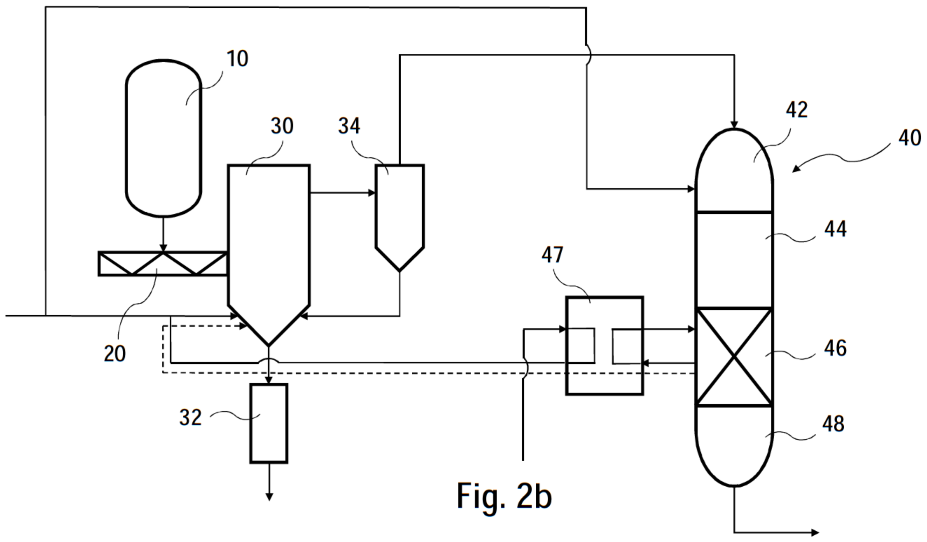

Die Figuren 2a und 2b zeigen eine schematische Zeichnung eines ersten Abschnitts des Verfahrens zur Gewinnung eines Synthesegases aus Abfallprodukten.

Die Figur 2a zeigt einen Abfallmaterialbehälter 10 ist welchem ein Aufgabematerial gelagert ist. Als Aufgabematerial werden festförmige Kunststoffabfälle verwendet. Das Aufgabematerial wird über ein Zulaufsystem 20 in einen Vergasungsreaktor 30 weitergeleitet. Das Zulaufsystem 20 ist hier als Förderschnecke ausgebildet. In dem in Figur 2a dargestellten Beispiel ist der Vergasungsreaktor 30 als ein Wirbelstromvergaser ausgebildet. Zudem wird dem Vergasungsreaktor 30 ein Oxidationsmittelstrom zugeführt. Als Oxidationsmittelstrom wird hier ein Mischverhältnis aus einem ersten Oxidationsmittel, beispielsweise Wasserdampf und einem zweiten Oxidationsmittel, beispielsweise Kohlenstoffdioxid verwendet. In dem Vergasungsreaktor 30 findet die Vergasung des Aufgabematerials mit dem Oxidationsmittelstrom statt. Dabei entstehen neben einem Kohlenwasserstoffgasgemisch Aschearten in Form von Bodenasche und Flugasche. Die in dem Vergasungsreaktor entstehende Bodenasche setzt sich nach der Reaktion an einem Boden des Reaktors ab. Die Bodenasche wird durch ein Ascheentladesystem 32 aus dem Vergasungsreaktor 30 abgesondert. Die Flugasche wird mit dem Kohlenwasserstoffgasgemisch-Strom an einer Spitze des Vergasungsreaktors 30 ausgeleitet. Der Strom des Kohlenwasserstoffgasgemischs und der Flugasche passiert im Anschluss zu dem Vergasungsreaktor 30 eine Aschefalle 34, welche im Beispiel als ein Zyklon ausgebildet ist. Die Aschefalle 34 scheidet die im Strom vorhandene Flugasche ab und führt diese Flugasche dem Vergasungsreaktor 30 wieder zurück. Das von Flugasche gereinigte Kohlenwasserstoffgasgemisch wird nach der Aschefalle 34 in eine Reformer-Einheit 40 weitergeleitet.

In der Reformer-Einheit 40 befindet sich ein Plasmareformer 42. Dem Plasmareformer 42 wird das Kohlenwasserstoffgasgemisch und ein erstes und/oder zweites Oxidationsmittel über einen Oxidationsmittelstrom zugeführt. Als Oxidationsmittelstrom werden die gleichen Oxidationsmittel als beim Oxidationsmittelstrom des Vergasungsreaktor 30 verwendet, wobei das Mischungsverhältnis von dem Mischungsverhältnis des Oxidationsmittelstroms des Vergasungsreaktor 30 abweichen kann. Hier werden die Oxidationsmittel Wasserdampf und Kohlenstoffdioxid verwendet. Dabei findet in der Reformer-Einheit nach der Zugabe des Oxidationsmittelstroms in dem Plasmareformer 42 die Reformierungsreaktion zu rohem Synthesegas statt. Die Temperatur des rohen Synthesegases wird in der Reformer-Einheit 40 nach dem Plasmareformer 42 in einer thermischen Verweilkammer 44 reguliert. Die Regulierung erfolgt dabei durch den Erhalt der Temperatur bei 850 °C für zwei Sekunden. Das rohe Synthesegas wird zudem durch eine mehrstufige Abkühlung geleitet. In einer Stufe der Abkühlung gibt das rohe Synthesegas einen Teil der thermischen Energie an einen Wärmeübertrager 46 ab. Dabei ist der Wärmeübertrager 46 ein Strahlungswärmeübertrager aus Keramik. Der Wärmeübertrager 46 gibt den Teil der thermischen Energie des rohen Synthesegases an einen Oxidationsmittelstrom ab, wobei der Oxidationsmittelstrom getrennt zugeleitet wird und/oder aus einem Produktstrom eines Synthesegases durch Kondensation abgeschieden und rückgeführt wird. Dabei wird der Oxidationsmittelstrom verdampft, wobei der Oxidationsmittelstrom auch verdampft und überhitzt werden kann. Der Wärmeübertrager 46 ist in dieser Ausführungsform ein Verdampfer.

Wie in Figur 2b gezeigt, kann der Wärmeübertrager 46 alternativ die von dem Plasmareformer 42 an das rohe Synthesegas abgegebene thermischen Energie zunächst an einen mit einem Wärmeträgermedium gefüllten Zwischenkreislauf 47 weitergeben. Als Wärmeträgermedium wird dabei ein Thermalöl verwendet. In dem Zwischenkreislauf 47 befinden sich zwei Wärmeübertrager. In einem ersten Wärmeübertrager wird die von dem Wärmeübertrager 46 weitergeleitete thermische Energie aufgenommen und an den Zwischenkreislauf übertragen. In einem zweiten Wärmeübertrager wird die thermische Energie des Zwischenkreislaufs 47 an den Oxidationsmittelstrom abgegeben. Dabei wird der Oxidationsmittelstrom wiederum verdampft, wobei der Oxidationsmittelstrom auch verdampft und überhitzt werden kann. Der Zwischenkreislauf dient in dieser Ausführungsform als ein Verdampfer.

Der in thermischer Energie erhöhte Oxidationsmittelstrom wird dem Vergasungsreaktor 30 zugeführt. Durch das Erhöhen der thermischen Energie des Oxidationsmittelstroms und die Rückführung des Oxidationsmittelstromes wird die Vergasung in dem Vergasungsreaktor 30 beschleunigt. Dabei wird ein Teil der in dem Vergasungsreaktor 30 benötigten thermischen Energie bereitgestellt.

Weiterhin wird das Kohlenwasserstoffgasgemisch aufbereitet, über das Abschrecken des rohen Synthesegases in einer Abkühlzone 48. Dabei passiert das rohe Synthesegas vor der Abfuhr aus der Reformer-Einheit 40 die Abkühlzone 48. Zur Abschreckung wird hierbei Wasser verwendet. Dabei wird das rohe Synthesegas auf ein Temperaturlevel abgekühlt, auf welchem es aus der Reformer-Einheit 40 geleitet werden kann.

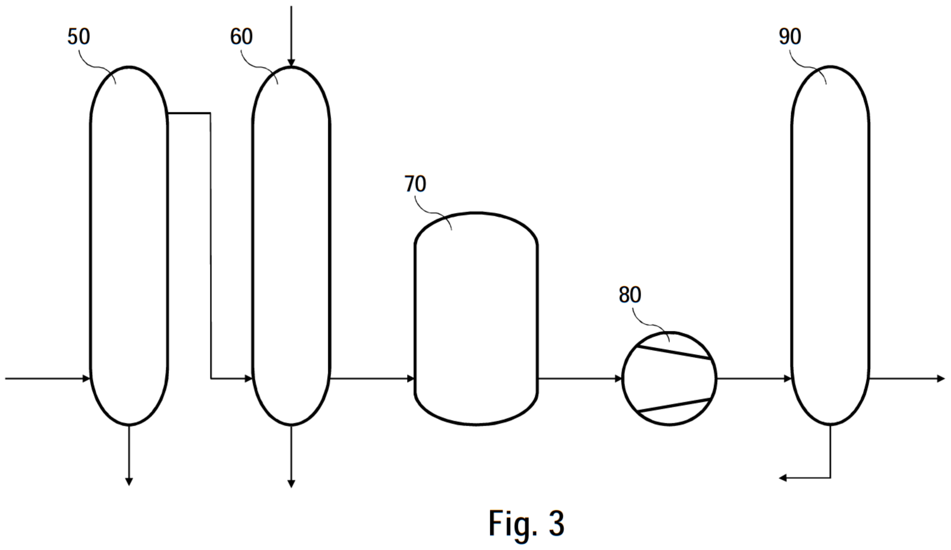

Die Figur 3 zeigt eine schematische Zeichnung eines zweiten Abschnitts der Gewinnung eines Synthesegases aus Abfallprodukten. Dabei wird das rohe Synthesegas, welches aus der Reformer-Einheit ausgeleitet wird, in eine Kondensator-Einheit 50 geführt. In der Kondensator-Einheit wird das rohe Synthesegas kondensiert und abgekühlt. Dabei wird ein Kondensat abgeschieden, wobei das Kondensat am Boden der Kondensator-Einheit 50 von dem rohen Synthesegas abgesondert wird. Dadurch entsteht ein saures Synthesegas, wobei das saure Synthesegas in eine Waschsäule weitergeleitet wird.

In der Waschsäule 60 werden in einem Waschverfahren mit einer reinen Waschlösung Schadstoffe, wie etwa Halogensäuren und andere Sauergase gebunden, welche mit dem sauren Synthesegas mitgeführt werden. Die reine Waschlösung wird der Waschsäule 60 zugeführt. Als Waschlösung wird hier Kalium-Bicarbonat verwendet. Darüber hinaus kann als Waschverfahren auch die Selexolwäsche oder die Rectisolwäsche stattfinden, wobei als Waschlösung dann Polyethylenglycol oder Methanol verwendet werden können. Die Schadstoffe stammen aus den Verbindungen der Kunststoffabfälle. Die Schadstoffe werden dabei an die reine Waschlösung gebunden und von dem Synthesegas abgeschieden. Dadurch entsteht Synthesegas und eine mit Schadstoffen verunreinigte Waschlösung. Das Synthesegas wird in einen Speichertank 70 weitergeleitet, während die verunreinigte Waschlösung mit den Schadstoffen in einen separaten Kreislauf gelangt. Dabei wird in dem Kreislauf die mit Schadstoffen verunreinigte Waschlösung aufbereitet, wobei die Schadstoffe aus der Waschlösung abgesondert und die reine Waschlösung wieder der Waschsäule 60 zugeführt.

In dem Speichertank 70 wird ein Produktstrom des rohen Synthesegases gespeichert. Dabei ist der Speicher hier als Behälter ausgeführt, wobei eine beliebige Art des Speichers verwendet werden kann wie etwa Kavernenspeicher oder absorptive Speicher. Dabei werden die Schwankungen einer fluktuierenden Produktion von Synthesegas kompensiert. Das Synthesegas wird von dem Speichertank 70 in eine Kompressorstation 80 weitergeleitet.

Die Kompressorstation 80 verdichtet dabei das Synthesegas auf ein höheres Druckniveau, sodass es in Pipelines, Gasnetze oder weiterführende Prozesse geleitet werden kann. Die Kompressorstation 80 ermöglicht dies durch Verdichter. Dabei können ein, zwei, drei, vier oder eine beliebige Anzahl an Verdichtern verwendet werden. Weiterführende Prozesse sind beispielsweise eine chemische Synthese, die Kraftstoffherstellung, die Wassersstofferzeugung oder die Stromerzeugung.

Nach der Kompressorstation 80 werden Störgase in einem Gasabscheider 90 aus dem Synthesegas durch Kondensation abgeschieden und in den Wärmeübertrager 46 zurückgeführt. Als Störgas wird ein Oxidationsmittelstrom aus Kohlenstoffdioxid verstanden, wobei auch weitere Störgase aus dem Synthesegas durch den Gasabscheider 90 entfernt werden können.

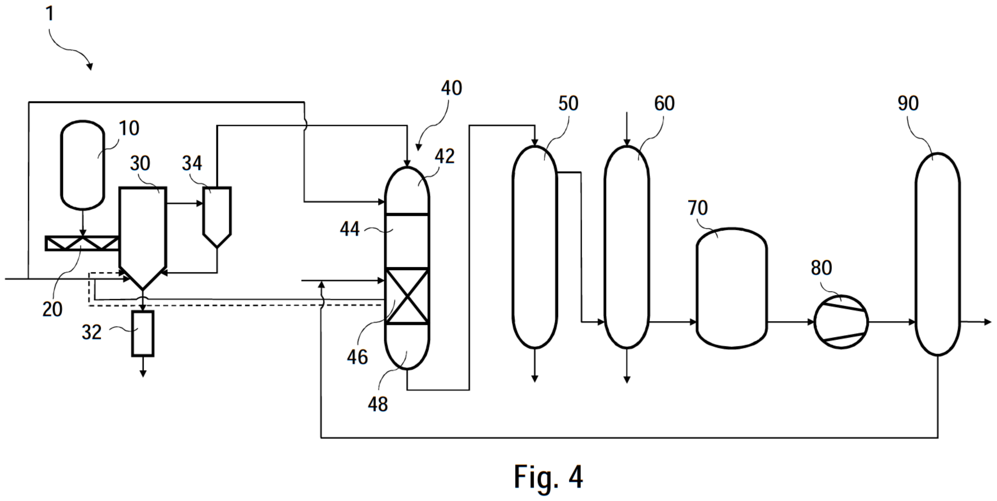

In Figur 4 ist eine schematische Zeichnung des Verfahrens zur Gewinnung eines Synthesegases aus Abfallprodukten gezeigt. Dabei ist eine Kopplung der Abschnitte aus den Figuren 2a und 3 gezeigt. In einem Abfallmaterialbehälter 10 ist ein Aufgabematerial gelagert. Als Aufgabematerial werden festförmige Kunststoffabfälle verwendet. Das Aufgabematerial wird über ein Zulaufsystem 20 in einen Vergasungsreaktor 30 weitergeleitet. Das Zulaufsystem 20 ist hier als Förderschnecke ausgebildet. Der Vergasungsreaktor 30 ist ein Wirbelstromvergaser. Zudem wird dem Vergasungsreaktor 30 ein Oxidationsmittelstrom zugeführt. Als Oxidationsmittelstrom wird hier ein Mischverhältnis aus Wasserdampf und Kohlenstoffdioxid verwendet. In dem Vergasungsreaktor 30 findet die Vergasung des Aufgabematerials mit dem Oxidationsmittelstrom statt. Dabei entstehen neben einem Kohlenwasserstoffgasgemisch Aschearten in Form von Bodenasche und Flugasche. Die in dem Vergasungsreaktor entstehende Bodenasche setzt sich nach der Reaktion an einem Boden des Reaktors ab. Die Bodenasche wird durch ein Ascheentladesystem 32 aus dem Vergasungsreaktor 30 abgesondert. Die Flugasche wird mit dem Strom an Kohlenwasserstoffgasgemisch an einer Spitze des Vergasungsreaktors 30 ausgeleitet. Der Strom an Kohlenwasserstoff-gasgemisch und Flugasche passiert im Anschluss zu dem Vergasungsreaktor 30 eine Aschefalle 34, welche hier ein Zyklon ist. Die Aschefalle 34 scheidet die im Strom vorhandene Flugasche ab und führt diese Flugasche dem Vergasungsreaktor 30 wieder zurück. Das von Flugasche gereinigte Kohlenwasserstoffgasgemisch wird nach der Aschefalle 34 in eine Reformer-Einheit 40 weitergeleitet.

In der Reformer-Einheit 40 befindet sich ein Plasmareformer 42. Dem Plasmareformer 42 wird das Kohlenwasserstoffgasgemisch und ein Oxidationsmittelstrom zugeführt. Das erste und/oder zweite Oxidationsmittel des zugeführten Oxidationsmittelstroms entspricht dem ersten und/oder zweiten Oxidationsmittel des Vergasungsreaktors 30, wobei das Mischungsverhältnis von dem Mischungsverhältnis des Oxidationsmittelstroms des Vergasungsreaktors 30 abweichen kann. Hier werden die Oxidationsmittel Wasserdampf und Kohlenstoffdioxid verwendet. Dabei findet in der Reformer-Einheit nach der Zugabe des Oxidationsmittelstroms in dem Plasmareformer 42 die Reformierungsreaktion zu rohem Synthesegas statt. Die Temperatur des rohen Synthesegases wird in der Reformer-Einheit 40 nach dem Plasmareformer 42 in einer thermischen Verweilkammer 44 reguliert. Die Regulierung erfolgt dabei durch den Erhalt der Temperatur bei 850 °C für zwei Sekunden. Das rohe Synthesegas wird zudem durch eine mehrstufige Abkühlung geleitet. In einer Stufe der Abkühlung gibt das rohe Synthesegas einen Teil der thermischen Energie an einen Wärmeübertrager 46 ab. Dabei ist der Wärmeübertrager 46 ein Strahlungswärmeübertrager aus Keramik. Der Wärmeübertrager 46 gibt den Teil der thermischen Energie des rohen Synthesegases an einen Oxidationsmittelstrom ab, wobei der Oxidationsmittelstrom separat zugeleitet wird und/oder aus einem Produktstrom eines Synthesegases von einem Gasabscheider 90 durch Kondensation entzogen und rückgeführt wird. Dabei wird der Oxidationsmittelstrom verdampft, wobei der Oxidationsmittelstrom auch verdampft und überhitzt werden kann. Der Wärmeübertrager 46 ist in dieser Ausführungsform ein Verdampfer.

Der in thermischer Energie erhöhte Oxidationsmittelstrom wird dem Vergasungsreaktor 30 zugeführt. Durch das Erhöhen der thermischen Energie des Oxidationsmittelstroms und die Rückführung des Oxidationsmittelstromes wird die Vergasung in dem Vergasungsreaktor 30 beschleunigt. Dabei wird ein Teil der in dem Vergasungsreaktor 30 benötigten thermischen Energie bereitgestellt. Darüber hinaus wird das aus dem Kohlenwasserstoffgasgemisch entstandene Synthesegas durch das Abschrecken des rohen Synthesegases in einer Abkühlzone 48 aufbereitet. Dabei passiert das rohe Synthesegas vor der Abfuhr aus der Reformer-Einheit 40 die Abkühlzone 48. Zur Abschreckung wird hierbei Wasser verwendet. Dabei wird das rohe Synthesegas auf ein Temperaturlevel abgekühlt, auf welchem es aus der Reformer-Einheit 40 in eine Kondensator-Einheit 50 geleitet wird.

In der Kondensator-Einheit 50 wird das rohe Synthesegas kondensiert und abgekühlt. Dabei wird ein Kondensat abgeschieden, wobei das Kondensat am Boden der Kondensator-Einheit 50 von dem rohen Synthesegas abgesondert wird. Dadurch entsteht ein saures Synthesegas, wobei das saure Synthesegas in eine Waschsäule 60 weitergeleitet wird.

In der Waschsäule 60 werden in einem Waschverfahren mit einer reinen Waschlösung Schadstoffe, wie etwa Halogensäuren und andere Sauergase gebunden, welche mit dem sauren Synthesegas mitgeführt werden. Die reine Waschlösung wird in die Waschsäule 60 eingeleitet. Als Waschlösung wird hier Kaliumhydrogencarbonat verwendet. Die Schadstoffe stammen aus den Verbindungen der Kunststoffabfälle. Die Schadstoffe werden dabei an die reine Waschlösung gebunden und von dem Synthesegas abgeschieden. Dadurch entsteht Synthesegas und eine mit Schadstoffen verunreinigte Waschlösung. Das Synthesegas wird in einen Speichertank 70 weitergeleitet, während die verunreinigte Waschlösung mit den Schadstoffen in einen separaten Kreislauf gelangt. Dabei wird in dem Kreislauf die mit Schadstoffen verunreinigte Waschlösung aufbereitet, wobei die Schadstoffe aus der Waschlösung abgesondert und die reine Waschlösung wieder der Waschsäule 60 zugeführt.

In dem Speichertank 70 wird ein Produktstrom des rohen Synthesegases gespeichert. Dabei ist der Speicher hier als Behälter ausgeführt. Dabei werden die Schwankungen einer fluktuierenden Produktion von Synthesegas kompensiert. Das Synthesegas wird von dem Speichertank 70 in eine Kompressorstation 80 weitergeleitet.

Die Kompressorstation 80 verdichtet dabei das Synthesegas auf ein höheres Druckniveau, sodass es in Pipelines, Gasnetze oder weiterführende Prozesse geleitet werden kann. Die Kompressorstation 80 ermöglicht dies durch Verdichter.

Nach der Kompressorstation 80 werden Störgase in einem Gasabscheider 90 aus dem Synthesegas durch Kondensation entzogen und dem Wärmeübertrager 46 zurückgeführt. Als Störgas wird insbesondere Kohlenstoffdioxid als Oxidationsmittelstrom verstanden, wobei auch weitere Störgase aus dem Synthesegas durch den Gasabscheider 90 entfernt werden können.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezugszeichenliste

- 1: Vorrichtung

- 10: Abfallmaterialbehälter

- 20: Zulaufsystem

- 30: Vergasungsreaktor
- 32: Ascheentladesystem
- 34: Aschefalle

- 40: Reformer-Einheit
- 42: Plasmareformer
- 44: Thermische Verweilkammer
- 46: Wärmeübertrager
- 47: Zwischenkreislauf
- 48: Abkühlzone

- 50: Kondensator-Einheit

- 60: Waschsäule

- 70: Speichertank

- 80: Kompressorstation

- 90: Gasabscheider

- S1: Zuführen des Aufgabematerials
- S2: Vergasung des Aufgabematerials
- S3: Zuführen des Kohlenwasserstoffgasgemisches
- S4: Aufbereitung des Kohlenwasserstoffgasgemisches
- S44: Kühlen des rohen Synthesegases
- S444: Regulation der Temperatur des rohen Synthesegases
- S4444: Abschrecken des rohen Synthesegases

## Patentansprüche

1. Verfahren zur Gewinnung eines Synthesegases aus mindestens einem Abfallprodukt über eine Vergasungsreaktion in Verbindung mit einer Reformierungsreaktion unter einer Rückführung thermischer Energie, wobei das Verfahren die folgenden Schritte umfasst:
S1: Zuführen eines Aufgabematerials und eines ersten und/oder zweiten Oxidationsmittels in einen Vergasungsreaktor (30), wobei das Aufgabematerial insbesondere mindestens ein festförmiges, flüssiges und/oder gasförmiges Abfallprodukt umfasst;
S2: Vergasung des Aufgabematerials in dem Vergasungsreaktor (30) in Gegenwart des ersten und/oder zweiten Oxidationsmittels unter Zuführung thermischer Energie in ein Kohlenwasserstoffgasgemisch, wobei mindestens ein Nebenprodukt entsteht, wobei das Nebenprodukt insbesondere Bodenasche und/oder Flugasche umfasst;
S3: Zuführen des Kohlenwasserstoffgasgemisches aus dem Vergasungsreaktor (30) in eine Reformer-Einheit (40);
S4: Aufbereitung des Kohlenwasserstoffgasgemisches in der Reformer-Einheit (40) in ein rohes Synthesegas unter Zugabe des ersten und/oder zweiten Oxidationsmittels;
wobei zumindest ein Teil einer in Schritt S4 anfallenden thermischen Energie in den Vergasungsreaktor (30) rückgeführt wird, um zumindest einen Teil der in Schritt S2 zugeführten thermischen Energie bereitzustellen.

2. Verfahren zur Gewinnung eines Synthesegases nach Anspruch 1, wobei der Schritt S4 der Aufbereitung des Kohlenwasserstoffgasgemisches in der Reformer-Einheit (40) neben einer Reformierung des Kohlenwasserstoffgasgemisches in ein rohes Synthesegas in einem Plasmareformer (42) zumindest einen Schritt aus
- S44: Kühlen des rohen Synthesegases;
- S444: Regulation der Temperatur des rohen Synthesegases in einer thermischen Verweilkammer (44) zur Erhöhung der Reaktionsausbeute; und
- S4444: Abschrecken des rohen Synthesegases in einer Abkühlzone (48). umfasst.

3. Verfahren zur Gewinnung eines Synthesegases nach Anspruch 1 oder 2, wobei der Teil der in Schritt S4 anfallenden thermischen Energie über ein erstes und/oder zweites Oxidationsmittel in den Vergasungsreaktor (30) rückgeführt wird.

4. Verfahren zur Gewinnung eines Synthesegases nach Anspruch 3, wobei das erste und/oder das zweite Oxidationsmittel zur Rückführung der thermischen Energie über einen Wärmeübertrager (46), insbesondere einem Strahlungswärmeübertrager oder einem Keramikwärmeübertrager zwischen der thermischen Verweilkammer (44) und der Abkühlzone (48), erhitzt wird.

5. Verfahren zur Gewinnung eines Synthesegases nach Anspruch 3, wobei die Rückführung der thermischen Energie über einen Wärmeübertrager (46) zwischen der thermischen Verweilkammer (44) und der Abkühlzone (48) erfolgt, wobei der Wärmeübertrager (46) ein Medium in einem Zwischenkreislauf erhitzt und wobei das Medium anschließend diese Wärme durch mindestens einen zweiten Wärmeübertrager (47) an mindestens eine Wärmesenke abgibt, wobei die mindestens eine Wärmesenke eine Wärmesenke mit einem Strom an erstem und/oder zweitem Oxidationsmittel umfasst.

6. Verfahren zur Gewinnung eines Synthesegases nach Anspruch 3 wobei zwischen dem Wärmeübertrager (46) und dem Vergasungsreaktor (30) zumindest ein Überhitzer umfasst ist.

7. Verfahren zur Gewinnung eines Synthesegases nach einem der Ansprüche 3 bis 6, wobei zumindest ein Teil des erhitzten ersten und/oder zweiten Oxidationsmittels den Schritt S2 beschleunigt.

8. Verfahren zur Gewinnung eines Synthesegases nach einem der vorhergehenden Ansprüche, wobei der Schritt S2 eine Absonderung der während der Vergasung entstehenden Bodenasche und eine zumindest teilweise Abscheidung und Rückführung einer bei der Vergasung entstehenden und von dem Kohlenwasserstoffgasgemisch getragenen Flugasche in den Vergasungsreaktor (30) umfasst, wobei bevorzugt die Absonderung ferner eine Absonderung der Bodenasche über ein Ascheentladesystem (32) umfasst, wobei bevorzugt der Schritt der Abscheidung und Rückführung das Abscheiden der sich nach der Vergasung im Kohlenwasserstoffgasgemisch befindlichen Flugasche über eine Aschefalle (34), insbesondere einen Zyklon umfasst.

9. Verfahren zur Gewinnung eines Synthesegases nach einem der vorhergehenden Ansprüche, wobei ein Verhältnis der Bestandteile von Wasserstoff, H2, und Kohlenstoffmonoxid, CO, in dem Synthesegas über das Mischverhältnis des ersten Oxidationsmittels und des zweiten Oxidationsmittels geregelt wird.

10. Verfahren zur Gewinnung eines Synthesegases nach einem der vorhergehenden Ansprüche, wobei das Verfahren nach Schritt S4 eine Kühlung des rohen Synthesegases in einer Kondensator-Einheit (50) unter Abscheidung eines Kondensates umfasst.

11. Verfahren zur Gewinnung eines Synthesegases nach einem der vorhergehenden Ansprüche, wobei der Betriebsdruck des Vergasungsreaktors (30) und der Betriebsdruck des Plasmareaktors (42) zwischen 1 bar und 20 bar, bevorzugt 1,5 und 4 bar, Absolutdruck liegen.

12. Verfahren zur Gewinnung eines Synthesegases nach einem der vorhergehenden Ansprüche 2 bis 11, wobei der Schritt der Regulation der Temperatur des rohen Synthesegases in der thermischen Verweilkammer (44) ein Halten der Temperatur des rohen Synthesegases für mindestens zwei Sekunden bei mindestens 850°C, bevorzugt 1.200°C, umfasst.

13. Verfahren zur Gewinnung eines Synthesegases nach einem der vorhergehenden Ansprüche, wobei das erste Oxidationsmittel Wasserdampf, H2O, und das zweite Oxidationsmittel Kohlenstoffdioxid, CO2, umfasst.

14. Verfahren zur Gewinnung eines Synthesegases nach einem der vorhergehenden Ansprüche, wobei die Vergasung in Schritt S2 in einer Wirbelschichtvergasung, oder einer Festbettvergasung, oder einer Schneckenvergasung oder in einem Verdampfer erfolgt.

15. Verfahren zur Gewinnung eines Synthesegases nach einem der vorhergehenden Ansprüche, wobei der Vergasung in Schritt S2 ein Stoff, insbesondere ein Metallcarbonat, Metalloxid, Metallhydroxid oder Hydrogencarbonat, zum Abbinden von entstehenden Sauergasen zugeführt wird.

16. Verfahren zur Gewinnung eines Synthesegases nach einem der Ansprüche 2 bis 15, wobei während der Aufbereitung ferner eine Bogenentladung im Plasmareformer (42) durchführt wird.

17. Verfahren zur Gewinnung eines Synthesegases nach einem der Ansprüche 3 bis 16, wobei das Verfahren eine Abscheidung durch Kondensation und Rückführung von im Synthesegas befindlichen Störgasen zu der Reformer-Einheit (40) umfasst, wobei die Störgase bevorzugt Kohlenstoffdioxid umfassen, wobei das Kohlenstoffdioxid bevorzugt das zweite Oxidationsmittel zur Rückführung der in Schritt S4 anfallenden thermischen Energie bildet.

18. Verfahren zur Gewinnung eines Synthesegases nach Anspruch 1, wobei das in Schritt S1 zugeführte Aufgabematerial mindestens ein gasförmiges Abfallprodukt umfasst.

19. Vorrichtung (1) zur Gewinnung eines Synthesegases aus mindestens einem Abfallprodukt über eine Vergasungsreaktion in Verbindung mit einer Reformierungsreaktion unter einer Rückführung thermischer Energie, die Vorrichtung umfassend:
a. eine Lagerung eines Aufgabematerials und eines ersten und/oder zweiten Oxidationsmittels, wobei das Aufgabematerial insbesondere mindestens ein festförmiges, flüssiges, oder/und gasförmiges Abfallprodukt umfasst;
b. einen Vergasungsreaktor (30) zur Vergasung des Aufgabematerials, durch das erste und/oder zweite Oxidationsmittel unter Zuführung thermischer Energie in ein Kohlenwasserstoffgasgemisch und in mindestens ein Nebenprodukt, wobei das Nebenprodukt insbesondere Bodenasche und/oder Flugasche umfasst;
c. eine Reformer-Einheit (40) zur Aufbereitung des Kohlenwasserstoffgasgemisches in ein rohes Synthesegas unter weiterer Zugabe des ersten und/oder zweiten Oxidationsmittels; und
d. eine Kühleinrichtung zum Kühlen des rohen Synthesegases,
wobei zumindest ein Teil der in der Reformer-Einheit (40) abgegebenen thermischen Energie in den Vergasungsreaktor (30) rückgeführt wird um zumindest einen Teil der in den Vergasungsreaktor (30) zugeführten thermischen Energie bereitzustellen.

20. Vorrichtung (1) nach dem vorhergehenden Anspruch, wobei die Vorrichtung (1) dazu konfiguriert ist, das Verfahren nach einem der Ansprüche 1 bis 18 ausführen zu können.
